# EUROPÄISCHE PATENTANMELDUNG

(11) **EP 4 800 642 A1**
(43) Veröffentlichungstag der Anmeldung: **02.09.2026**
(21) Anmeldenummer: 26159131.7
(22) Anmeldetag: 17.02.2026
(51) Int. Cl.: G06T 7/00

(54) **WIEDERHOLUNGSPRÜFUNG VON ELEKTRISCHEN ANLAGEN**

(30) Priorität: 27.02.2025 DE 102025107519
(71) Anmelder: VEGA Grieshaber KG, 77709 Wolfach (DE)
(72) Erfinder: Wöhrle, Matthias, 77761 Schiltach (DE); Schätzle, Benjamin, 77978 Schuttertal (DE)
(74) Vertreter: Patentanwälte Bauer Vorberg Kayser

(57) **Zusammenfassung**

Die Erfindung betrifft ein computerimplementiertes Verfahren zur Wiederholungsprüfung von elektrischen Anlagen, insbesondere von Feldgeräten (1), umfassend: Erhalt von Bilddaten betreffend eine elektrische Anlage, Auswertung der Bilddaten, um zu bestimmen, ob sich die elektrische Anlage in einem ordnungsgemäßen Zustand befindet, wobei die Auswertung der Bilddaten basierend auf maschinellem Lernen und/oder künstlicher Intelligenz erfolgt, und Generierung eines Berichts, der angibt, ob sich die elektrische Anlage in dem ordnungsgemäßen Zustand befindet. Nach einem weiteren Aspekt der Erfindung wird System zur Wiederholungsprüfung von elektrischen Anlagen vorgeschlagen. Ferner wird ein Computerprogrammprodukt zur Wiederholungsprüfung von elektrischen Anlagen vorgeschlagen.

## Beschreibung

Die Erfindung betrifft ein computerimplementiertes Verfahren zur Wiederholungsprüfung von elektrischen Anlagen, insbesondere von Feldgeräten. Ferner wird ein System zur Wiederholungsprüfung von elektrischen Anlagen vorgeschlagen. Nach einem weiteren Aspekt der Erfindung wird Computerprogrammprodukt zur Wiederholungsprüfung vorgeschlagen.

Für einen sicheren Betrieb elektrischer Anlagen sind diese regelmäßig zu prüfen. Dazu kann beispielsweise eine Sichtprüfung durchgeführt werden, um gewisse Mängel wie Verschmutzungen oder Korrosion festzustellen. Eine Wiederholungsprüfung ist eine wiederkehrende oder regelmäßig durchzuführende Prüfung. Das Vorgehen bei der Durchführung von Wiederholungsprüfungen ist beispielsweise in der Norm DIN VDE 0105-100 spezifiziert. Bei der vom Menschen durchgeführten Prüfung kann es zu Fehlern kommen. So können gewisse Mängel durch das menschliche Auge schlichtweg übersehen werden. Darüber hinaus ist das Urteil eines menschlichen Prüfers subjektiv. Auch beispielsweise aufgrund von mangelnder Aufmerksamkeit oder wegen Müdigkeit kann es zu Fehleinschätzungen kommen.

Der Erfindung liegt deshalb die Aufgabe zu Grunde, ein Verfahren zur technischen Überprüfung elektrischer Anlagen anzugeben, wobei das Verfahren objektiv und besonders zuverlässig sein soll, sodass es eine höhere Anlagensicherheit gewährleistet. Ferner soll das Verfahren schnell und für den Anwender einfach umsetzbar sein. Es ist eine weitere Aufgabe der Erfindung, ein System zur Überprüfung von elektrischen Anlagen bereitzustellen. Ferner soll ein Computerprogrammprodukt zur Überprüfung elektrischer Anlagen bereitgestellt werden. Die Aufgabe wird gelöst durch das Verfahren nach Anspruch 1, das System nach Anspruch 14 und das Computerprogrammprodukt nach Anspruch 15. Die abhängigen Patentansprüche betreffen optionale Ausgestaltungsformen der Erfindung.

Es wird darauf hingewiesen, dass die in den unabhängigen und in den abhängigen Patentansprüchen aufgeführten Merkmale in beliebiger Weise miteinander kombiniert werden können, soweit dies technisch sinnvoll ist. Dies gilt auch über die Grenzen der Anspruchskategorien hinweg und auch dann, wenn ein Patentanspruch nicht von einem anderen Patentanspruch abhängig ist. Die Beschreibung charakterisiert und spezifiziert die Erfindung insbesondere im Zusammenhang mit den Figuren zusätzlich. Sofern in den Patentansprüchen oder der Beschreibung Elemente mit Zahlwörtern wie "erste", "zweite" etc. versehen sind, so dienen die Zahlwörter nur dazu, die Elemente unterscheidbar zu machen, treffen aber keine Aussage über eine Reihenfolge, eine Gesamtanzahl oder sonstige Eigenschaften der Elemente, es sei denn, dies wird explizit kenntlich gemacht.

Nach einem ersten Aspekt der Erfindung wird ein computerimplementiertes Verfahren zur Wiederholungsprüfung von elektrischen Anlagen, insbesondere von Feldgeräten, vorgeschlagen. Das Verfahren umfasst die folgenden Schritte: Erhalt von Bilddaten betreffend eine elektrische Anlage, Auswertung der Bilddaten, um zu bestimmen, ob sich die elektrische Anlage in einem ordnungsgemäßen Zustand befindet, wobei die Auswertung der Bilddaten basierend auf maschinellem Lernen und/oder künstlicher Intelligenz erfolgt, und Generierung eines Berichts, der angibt, ob sich die elektrische Anlage in dem ordnungsgemäßen Zustand befindet. Somit wird automatisiert ermittelt, ob die elektrische Anlage noch den technischen Anforderungen genügt. Aufgrund der computergestützten Auswertung kann es vermieden werden, dass die elektrische Anlage beispielsweise aufgrund einer subjektiven Fehleinschätzung weiterbetrieben wird. Somit wird ein höherer Sicherheitsstandard erreicht.

Dieses Verfahren kann insbesondere durch ein mobiles Endgerät ausgeführt werden, zum Beispiel ein Smartphone oder ein Tablet. Es ist aber auch möglich, dass das Verfahren durch eine sonstige Datenverarbeitungseinrichtung ausgeführt wird. Zur Durchführung einer Wiederholungsprüfung einer elektrischen Anlage kann ein Benutzer Bilder oder Videos der elektrischen Anlage aufnehmen, vorzugsweise unter Verwendung der Kamera eines mobilen Endgeräts. Dabei entstehen Bilddaten, die im Anschluss erfindungsgemäß ausgewertet werden. Die Auswertung erfolgt bevorzugt mittels eines Verfahrens aus dem Bereich des maschinellen Lernens und/oder der künstlichen Intelligenz. So ist es beispielsweise möglich, dass bei der Auswertung Verfahren verwendet werden, die auf der Nutzung neuronaler Netze beruhen. Es ist aber auch die Verwendung sonstiger Verfahren aus dem Zweig des maschinellen Lernens und/oder der künstlichen Intelligenz möglich, beispielsweise die Verwendung statistischer Verfahren. Erfindungsgemäß ist auch die Verwendung hybrider Ansätze möglich, das heißt es können unterschiedliche Verfahren aus dem Gebiet des maschinellen Lernens miteinander kombiniert werden.

Unter einer elektrischen Anlage ist im Sinne der vorliegenden Erfindung jedes elektrische Gerät zu verstehen, was insbesondere auch elektronische Vorrichtungen einschließt. Besonders vorteilhaft handelt es sich bei der elektrischen Anlage um ein Feldgerät. In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Gleichwohl kann ein Feldgerät auch einen Aktor aufweisen, zum Beispiel ein Stellventil. Die aus dem Stand der Technik bekannten Feldgeräte weisen in der Regel ein Gehäuse, einen Sensor und eine in dem Gehäuse angeordnete Steuereinheit auf.

Die Auswertung erfolgt bevorzugt dahingehend, dass überprüft wird, ob sich die elektrische Anlage in dem ordnungsgemäßen Zustand befindet. Ob sich die elektrische Anlage in dem ordnungsgemäßen Zustand befindet, wird erfindungsgemäß in einem Bericht ausgegeben. Der Bericht kann prinzipiell knapp gehalten sein und lediglich angeben, ob sich die elektrische Anlage in dem ordnungsgemäßen Zustand befindet. Es ist erfindungsgemäß aber auch möglich, dass der Bericht zusätzliche Informationen enthält. Bei dem Bericht kann es sich erfindungsgemäß um eine digitale Nachricht handeln (z.B. eine Benachrichtigung in einem Programm, eine E-Mail oder eine SMS). Es ist aber auch möglich, dass der Bericht in Form einer Datei ausgegeben wird, zum Beispiel als eine PDF-Datei, oder dass der Bericht in eine Datenbank geschrieben bzw. in diese ausgegeben wird. Der Bericht wird vorzugsweise durch eine App ausgegeben, ganz besonders vorteilhaft durch eine App, die das erfindungsgemäße Verfahren auf einem mobilen Endgerät ausführt.

Das erfindungsgemäße Auswertungsverfahren nutzt vorzugsweise ein vorab trainiertes Modell bzw. KI-Modell. Dieses kann beispielsweise als ein Datensatz vorliegen, der Gewichtungen eines neuronalen Netzwerks enthält. Das Modell ist vorzugsweise dazu trainiert, auf der Grundlage von Bilddaten zu erkennen, ob sich eine elektrische Anlage in dem ordnungsgemäßen Zustand befindet. Vorzugsweise ist das Modell so trainiert, dass es im Zusammenhang mit unterschiedlichen elektrischen Anlagen verwendet werden kann. Es ist ferner vorteilhaft, wenn das Modell so trainiert wurde, dass es bei einer elektrischen Anlage mehr als einen Fehlertyp erkennen kann. Das Modell ist außerdem vorzugsweise so trainiert, dass es einen Schweregrad eines Mangels oder von Mängeln der elektrischen Anlage einstufen kann, und bevorzugt daraus ableiten kann, ob sich die elektrische Anlage in dem ordnungsgemäßen Zustand befindet. Das Modell kann insbesondere mittels überwachtem Lernen trainiert sein. Dabei werden zum Training als Eingabedaten Bilddaten von elektrischen Anlagen verarbeitet, wobei den elektrischen Anlagen als Label jeweils eine Information zugeordnet ist, ob diese sich in dem ordnungsgemäßen Zustand befinden und/oder ob diese Mängel aufweisen. Bei diesem Vorgang können Bilddaten betreffend eine elektrische Anlage oder betreffend unterschiedliche elektrische Anlagentypen verwendet werden. Die Eingabedaten können erfindungsgemäß ferner eine Typeninformation der dargestellten elektrischen Anlage umfassen. So kann das Modell auch erlernen, bei elektrischen Anlagen unterschiedlichen Typs eine zutreffende Bewertung durchzuführen.

Bei der Auswertung der Bilddaten dahingehend, ob sich die elektrische Anlage in dem ordnungsgemäßen Zustand befindet, wird vorzugsweise überprüft, ob die elektrische Anlage mindestens einen sicherheitsrelevanten Mangel aufweist und/oder ob die elektrische Anlage aktuellen Errichtungsnormen für die elektrische Anlage entspricht. Insbesondere kann überprüft werden, ob sich die elektrische Anlage in einem ordnungsgemäßen Zustand gemäß der Norm DIN VDE 0105-100 befindet. Vorzugsweise wird nur eine Prüfung der elektrischen Anlage im Sinne einer Sichtprüfung durchgeführt, das heißt, es werden ausschließlich visuelle Daten verarbeitet. Erfindungsgemäß ist auch die Prüfung von Eigenschaften der elektrischen Anlage möglich, die nicht der Norm DIN VDE 0105-100 zugrunde liegen. Insbesondere kann auch eine Sichtprüfung nach einer anderen Norm erfolgen. Die Wiederholungsprüfung muss jedoch nicht zwangsläufig gemäß einer Norm durchgeführt werden.

Nach einer vorteilhaften Variante der Erfindung ist der mindestens eine sicherheitsrelevante Mangel ein Mangel, der sich aufgrund von Alterung, Abnutzung, Betriebs- und/oder Umgebungsbedingungen ergibt. Mit fortschreitender Zeit können beispielsweise Defekte an einer elektrischen Anlage auftreten, da Materialien oder Bauteile altern. Dies kann zu Defekten führen. Auch eine Abnutzung, beispielsweise aufgrund von Verschleiß beweglicher Teile, ist möglich. Ferner denkbar sind Verschmutzungen, insbesondere bei extremen Umgebungsbedingungen, beispielsweise unter Wasser oder innerhalb einer Maschine. Das der Auswertung zugrundeliegende Modell ist vorzugsweise zur visuellen Erkennung dieser Mängel bei elektrischen Anlagen trainiert.

Nach einer vorteilhaften Variante der Erfindung gibt der Bericht den mindestens einen Mangel der elektrischen Anlage an. Der Bericht enthält optional eine Angabe zu einer Art des mindestens einen Mangels, eine Angabe zu einem Schweregrad des mindestens einen Mangels, eine Angabe einer Position des mindestens einen Mangels an der elektrischen Anlage, einen Vorschlag zur Behebung des mindestens einen Mangels, und/oder einen Vorschlag zur Inspektion der elektrischen Anlage durch einen Techniker. Es ist erfindungsgemäß möglich, dass der Bericht ergänzend weitere Informationen, Hinweise und/oder Anweisungen enthält. Nach einer vorteilhaften Ausführungsform der Erfindung wird der Bericht archiviert und/oder in dem Bericht enthaltene Daten werden archiviert, zum Beispiel in einer Datenbank. So kann im Nachhinein auf Ergebnisse der Wiederholungsprüfung zugegriffen werden.

Besonders bevorzugt umfasst die Auswertung eine Bewertung einer Leserlichkeit eines Typenschilds der elektrischen Anlage, eine Bewertung eines Korrosionsgrads eines Gehäuses der elektrischen Anlage, eine Bewertung eines Grads einer Verunreinigung einer Prozessanschlussstelle und/oder eines Gehäuses der elektrischen Anlage, und/oder eine Bewertung eines Grads einer physikalischen Beschädigung der elektrischen Anlage. Erfindungsgemäß kann auf nur einen dieser Mängel oder auch auf mehrere der Mängel geprüft werden. Es ist erfindungsgemäß auch möglich, dass eine Prüfung auf ein Vorliegen sonstiger Mängel erfolgt.

Um auf Grundlage erkannter Mängel zu bewerten, ob sich die elektrische Anlage in dem ordnungsgemäßen Zustand befindet, können die Mängel beispielsweise separat ausgewertet werden. Zum Beispiel kann für jeden Mangel ein Schweregrad bestimmt werden. Gemäß einer vorteilhaften Ausführungsform wird, wenn mindestens ein Mangel einen vordefinierten Schweregrad überschreitet, ausgegeben, dass sich die elektrische Anlage nicht in dem ordnungsgemäßen Zustand befindet. Nach einer alternativen Ausführungsform der Erfindung werden Mängel unterschiedlichen Typs in Summe ausgewertet, um zu bestimmen, ob sich die elektrische Anlage in dem ordnungsgemäßen Zustand befindet. Beispielsweise kann das arithmetische Mittel von Schweregraden, die Mängeln unterschiedlichen Typs zugeordnet sind, bestimmt werden. Ferner ist es möglich, Mängel unterschiedlichen Typs bei der Auswertung unterschiedlich stark zu gewichten.

Es ist vorteilhaft, wenn die Bilddaten mindestens ein digitales Foto der elektrischen Anlage und/oder mindestens eine Videoaufnahme der elektrischen Anlage umfassen. Unter einer Videoaufnahme im Sinne der vorliegenden Erfindung sind alle Arten von Bewegtbildaufnahmen zu verstehen, insbesondere digitale Bewegtbildaufnahmen. In Abhängigkeit von dem Anwendungsszenario kann es erforderlich sein, entweder ein digitales Foto oder eine Videoaufnahme zu erstellen. Beispielsweise können sich digitale Fotos durch eine höhere Detailtreue auszeichnen als Videoaufnahmen, was jedoch häufig von dem Endgerät abhängig ist, mit dem die Bilddaten aufgenommen werden. Es ist ferner möglich, dass bestimmte Mängel nur auf einer Videoaufnahme erkennbar sind, zum Beispiel dann, wenn ein bewegliches Teil einer elektrischen Anlage sich nicht mehr oder nur noch eingeschränkt bewegt.

Es ist vorteilhaft, wenn das Verfahren ferner einen Erhalt einer Typeninformation umfasst, die einen Typ der elektrischen Anlage angibt, wobei der Auswertung der Bilddaten die Typeninformation zugrunde gelegt wird. Somit wird bevorzugt bei der Auswertung auch die Typeninformation genutzt. Die Typeninformation kann beispielsweise eine Modellnummer oder eine Seriennummer der elektrischen Anlage sein. Prinzipiell handelt es sich um eine Information, die es erlaubt, den Typ der elektrischen Anlage zu identifizieren. Vorzugsweise wird auf Grundlage der Typeninformation eine Prüfhistorie aufgerufen. Diese Prüfhistorie kann beispielsweise in einer Datenbank hinterlegt sein. Sie kann für eine bestimmte elektrische Anlage angeben, welche Prüfungen in der Vergangenheit durchgeführt werden, und Informationen zu aufgefundenen Mängeln enthalten. Nach einer optionalen Ausgestaltungsform der Erfindung werden Merkmale der elektrischen Anlage, die im Rahmen der Auswertung der Bilddaten überprüft werden, auf Grundlage der Prüfhistorie ausgewählt.

Vorzugsweise beruht die Typeninformation auf einer Dateneingabe des Benutzers. So ist es beispielsweise möglich, dass ein Benutzer in ein Endgerät eine Typennummer der elektrischen Anlage eingibt, oder auf einem Display des Endgeräts den Typ der elektrischen Anlage, die überprüft werden soll, auswählt. Alternativ oder zusätzlich ist es möglich, dass die Typeninformation aus den Bilddaten extrahiert wird, wobei die Typeninformation auf Grundlage eines Erscheinungsbilds der elektrischen Anlage, eines Inhalts eines Typenschilds der elektrischen Anlage und/oder eines QR-Codes ermittelt wird. Bei dem QR-Code kann es sich insbesondere um einen QR-Code handeln, der auf der elektrischen Anlage aufgebracht ist. Gemäß diesen Merkmalen erfolgt eine visuelle Auswertung der Bilddaten. Diese kann insbesondere auf der Grundlage von künstlicher Intelligenz und/oder maschinellem Lernen erfolgen. So kann beispielsweise ein Typenschild identifiziert werden und dessen Inhalt ausgelesen werden. Die Typeninformation kann allerdings auch auf Grundlage sonstiger Verfahren ermittelt werden, beispielsweise durch Auswertung eines QR-Codes. Nach einer vorteilhaften Variante der Erfindung wird die Typeninformation bereits ermittelt, bevor mit der Auswertung der Bilddaten begonnen wird.

Das Verfahren umfasst vorzugsweise eine Ausgabe einer ersten Anweisung, ein digitales Foto oder ein Video des Typenschilds der elektrischen Anlage aufzunehmen. Somit wird bevorzugt ein Benutzer dazu veranlasst, Bilddaten aufzunehmen, die das Typenschild der elektrischen Anlage enthalten. Auf Grundlage des Typenschilds kann der Typ der elektrischen Anlage ermittelt werden. Die erste Anweisung kann beispielsweise an einen Benutzer eines mobilen Endgeräts ausgegeben werden. Vorteilhaft verwendet der Benutzer des mobilen Endgeräts eine App, die das erfindungsgemäße Verfahren ausführt. Die erste Anweisung kann beispielsweise in einer Textbenachrichtigung, einer Audiobenachrichtigung oder dergleichen beinhaltet sein.

Es kann erfindungsgemäß vorgesehen sein, dass das Verfahren ferner eine Ausgabe einer zweiten Anweisung zur Aufnahme der Bilddaten umfasst, wobei die zweite Anweisung eine Information enthält, ob ein digitales Foto oder ein Video aufgenommen werden soll, welches Detail der elektrischen Anlage von der Aufnahme erfasst werden soll, in welchem Abstand von der elektrischen Anlage die Aufnahme durchzuführen ist, mit welcher optischen Vergrößerung die Aufnahme durchzuführen ist, unter welchem Blickwinkel die Aufnahme durchzuführen ist, und/oder ob die Aufnahme unter Verwendung von Blitzlicht oder zusätzlicher Beleuchtung durchzuführen ist. Somit kann nach vorteilhaften Ausführungsformen der Erfindung veranlasst werden, unter welchen Bedingungen und/oder auf welche Weise die Bilddaten erstellt werden. So kann darauf hingewirkt werden, dass relevante Details, die zur Bewertung, ob die elektrische Anlage sich in dem ordnungsgemäßen Zustand befindet, in den Bilddaten enthalten sind. Eine vollständige und qualitativ hochwertige Datenerfassung wird sichergestellt. Die zweite Anweisung kann beispielsweise an einen Benutzer eines mobilen Endgeräts ausgegeben werden, das das erfindungsgemäße Verfahren ausführt. Die zweite Anweisung kann beispielsweise in einer Textbenachrichtigung, einer Audiobenachrichtigung oder dergleichen beinhaltet sein.

Erfindungsgemäß können mehrere zweite Anweisungen nacheinander ausgegeben werden. Zum Beispiel kann der Benutzer zunächst instruiert werden, ein bestimmtes Detail der elektrischen Anlage zu erfassen. Danach kann der Benutzer instruiert werden, eine bestimmte optische Vergrößerung einzustellen. So wird vermieden, dass der Benutzer zu viele Instruktionen auf einmal erhält. Stattdessen wird es dem Benutzer ermöglicht, erforderliche Anpassungen der Aufnahme schrittweise vorzunehmen. Das Verfahren kann erfindungsgemäß so ausgestaltet sein, dass eine nächste zweite Anweisung erst ausgegeben wird, sobald Anforderungen gemäß einer vorhergehenden zweiten Anweisung erfüllt worden sind. Dies wird bevorzugt so umgesetzt, dass Bilddaten, die beispielsweise von einem mobilen Endgerät aufgenommen werden, laufend bzw. in Echtzeit ausgewertet werden. Auch dies kann mit der Unterstützung von künstlicher Intelligenz bzw. Verfahren aus dem Gebiet des maschinellen Lernens erfolgen.

Das Verfahren umfasst vorzugsweise ferner einen Erhalt vorläufiger Bilddaten betreffend die elektrische Anlage, wobei eine Prüfung erfolgt, ob die vorläufigen Bilddaten mindestens eine Unzulänglichkeit aufweisen, die für die Auswertung, ob sich die elektrische Anlage in dem ordnungsgemäßen Zustand befindet, hinderlich ist, und wobei die Prüfung bevorzugt basierend auf maschinellem Lernen und/oder künstlicher Intelligenz erfolgt. Falls die vorläufigen Bilddaten die mindestens eine Unzulänglichkeit aufweisen, wird vorzugsweise eine Nachricht ausgegeben, die die mindestens eine Unzulänglichkeit aufzeigt. Somit kann ermittelt werden, ob auf Grundlage der Bilddaten die Auswertung, ob sich die elektrische Anlage in dem ordnungsgemäßen Zustand befindet, bereits möglich ist. Falls dies nicht der Fall ist, kann mittels der Nachricht beispielsweise ein Benutzer eines Endgeräts benachrichtigt werden, das das erfindungsgemäße Verfahren ausführt.

Die Nachricht kann beispielsweise eine Textbenachrichtigung, eine Audiobenachrichtigung oder dergleichen sein.

Das Auswertungsverfahren, das auf maschinellem Lernen und/oder künstlicher Intelligenz erfolgt, wurde vorzugsweise so trainiert, dass es die oben beschriebene Prüfung durchführen kann. Zum Beispiel kann das Modell mittels überwachten Lernens darauf trainiert werden, Mängel von Bilddaten zu identifizieren. Dazu kann anhand von Beispielen erlernt werden, in welchen Fällen eine korrekte Auswertung der Bilddaten möglich ist und in welchen Fällen die korrekte Auswertung der Bilddaten nicht möglich ist.

Die Prüfung auf Mängel erfolgt vorzugsweise in Echtzeit. Dies ist so zu verstehen, dass die vorläufigen Bilddaten unmittelbar oder zumindest sobald wie möglich auswertet werden. In diesem Sinne beginnt die Prüfung nicht erst, nachdem die vorläufigen Bilddaten vollständig erfasst worden sind, sondern bereits während der Aufnahme von digitalen Fotos oder von Videos. Vorzugsweise wird eine Rückmeldung betreffend aufgefundene Mängel unmittelbar an einen Benutzer, zum Beispiel einen Benutzer eines Endgeräts, das das erfindungsgemäße Verfahren ausführt, ausgegeben. Nach anderen Ausführungsformen der Erfindung ist es hingegen möglich, dass ein Benutzer angibt, wann die vorläufigen Bilddaten vollständig sind. Erst dann erfolgt deren Prüfung auf Mängel.

Nach vorteilhaften Ausgestaltungsformen der Erfindung besteht die mindestens eine Unzulänglichkeit darin, dass eine Ansicht der elektrischen Anlage fehlt, die elektrische Anlage in einem ungeeigneten Abstand aufgenommen wurde, die elektrische Anlage in einem ungeeigneten Blickwinkel aufgenommen wurde, die elektrische Anlage mit ungeeignetem Blitzlicht oder ungeeigneter Beleuchtung aufgenommen wurde, und/oder die vorläufigen Bilddaten eine ungeeignete Bildschärfe aufweisen. Es versteht sich jedoch, dass erfindungsgemäß auch sonstige Mängel in den Bilddaten identifiziert werden können. Dies setzt ein entsprechendes Training einer verwendeten künstlichen Intelligenz bzw. eines verwendeten Verfahrens aus dem Bereich des maschinellen Lernens voraus.

Nach einem weiteren Aspekt der Erfindung wird ein System zur Wiederholungsprüfung von elektrischen Anlagen vorgeschlagen, insbesondere von Feldgeräten, mit einer Vorrichtung zur Datenverarbeitung, wobei die Vorrichtung dazu eingerichtet ist, das vorangehend beschriebene Verfahren auszuführen. Das System zur Wiederholungsprüfung wird vorteilhaft durch mindestens einen Rechner gebildet. Es ist auch möglich, dass das System zur Wiederholungsprüfung durch ein mobiles Endgerät gebildet wird, zum Beispiel ein Smartphone oder ein Tablet. Das System weist vorzugsweise eine Einheit zur Erfassung der Bilddaten auf, insbesondere eine Kamera.

Es ist erfindungsgemäß auch möglich, dass das System zur Wiederholungsprüfung durch ein sonstiges Rechnersystem gebildet wird, zum Beispiel durch einen Server. Dieser kann erfindungsgemäß dazu eingerichtet sein, beispielsweise über ein Netzwerk mit einem mobilen Endgerät zu kommunizieren und von diesem die Bilddaten und optional sonstige Daten zu erhalten, die von dem mobilen Endgerät erfasst werden. Dabei kann es sich beispielsweise um Nutzereingaben handeln. Vorteilhaft ist das Rechnersystem dazu eingerichtet, auch Ausgabedaten an das mobile Endgerät zu versenden, beispielsweise den Bericht, der angibt, ob sich die elektrische Anlage in dem ordnungsgemäßen Zustand befindet. Das Rechnersystem ist bevorzugt dazu eingerichtet, die Auswertung der Bilddaten vollständig oder teilweise durchzuführen. Nach möglichen Varianten der Erfindung kann ein Teil der Auswertung auch durch andere Recheneinheiten übernommen werden. Dies gilt ebenso für andere Teilschritte oder Teilaspekte des Verfahrens. Insbesondere ist es möglich, dass Teilaspekte des Verfahrens durch das mobile Endgerät durchgeführt werden. Nach einer vorteilhaften Variante der Erfindung umfasst das System zur Wiederholungsprüfung sowohl das Rechnersystem als auch das mobile Endgerät. Das Rechnersystem ist mit dem mobilen Endgerät vorzugsweise über eine Netzwerkverbindung verknüpft.

Nach einem weiteren Aspekt der Erfindung wird ein Computerprogrammprodukt vorgeschlagen, das Befehle umfasst, die bei der Ausführung des Programms durch einen Computer diesen veranlassen, das vorangehend beschriebene Verfahren durchzuführen. Das Computerprogrammprodukt wird bevorzugt durch das vorangehend beschriebene System ausgeführt bzw. ist zur Ausführung auf diesem vorgesehen. Das Computerprogrammprodukt ist bevorzugt eine App für ein mobiles Endgerät. Es kann sich jedoch auch um eine Software handeln, die auf einem anderen Rechnersystem ausgeführt wird. Es ist erfindungsgemäß auch möglich, dass das Computerprogrammprodukt mehrere Teile aufweist, sodass es verteilt beispielsweise auf dem vorangehend beschriebenen Rechnersystem sowie auf dem mobilen Endgerät ausgeführt werden kann.

Weitere Merkmale und Vorteile der Erfindung ergeben sich aus den Zeichnungen, die dem Fachmann die Erfindung verdeutlichen sollen, sodass er die Erfindung ausführen kann. Die Zeichnungen beschränken die Erfindung jedoch nicht. Dennoch stellen die Zeichnungen vorteilhafte Aspekte der Erfindung dar, deren Merkmale - ggf. auch einzeln - zur Konkretisierung der unter Schutz zu stellenden Erfindung verwendet werden können. Dabei zeigt:
Fig. 1 eine schematische Darstellung eines Szenarios mit einem Feldgerät, das einer Wiederholungsprüfung gemäß dem erfindungsgemäßen Verfahren unterzogen wird und
Fig. 2 ein Ablaufdiagramm des erfindungsgemäßen Verfahrens.

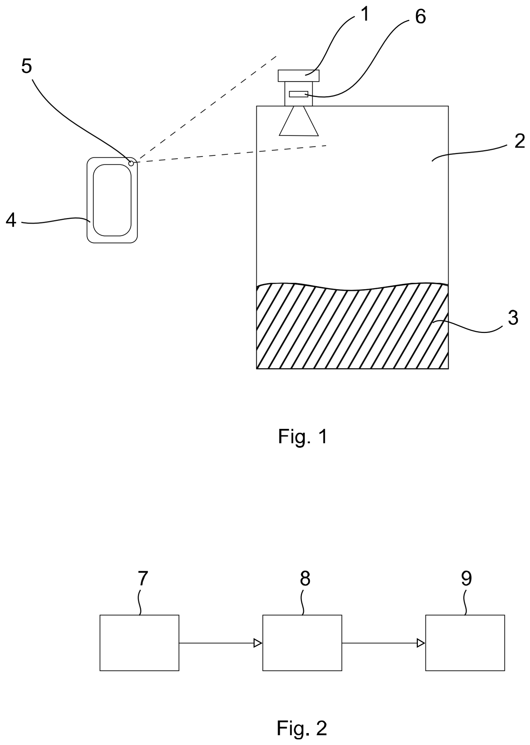

Fig. 1 zeigt eine schematische Darstellung eines Szenarios mit einem Feldgerät 1, das einer Wiederholungsprüfung gemäß dem erfindungsgemäßen Verfahren unterzogen wird. Bei dem Feldgerät 1 handelt es sich um ein Füllstandmessgerät, das in einem Behältnis 2 verbaut ist. Das Behältnis 2 ist mit einer Flüssigkeit 3 befüllt, deren Füllhöhe durch das Feldgerät 1 mittels eines Radarsensors ermittelt wird. In regelmäßigen zeitlichen Abständen ist eine Wiederholungsprüfung durchzuführen. Diese dient dazu, etwaige Mängel des Feldgeräts 1 zu erkennen.

Zur Durchführung der Wiederholungsprüfung wird ein mobiles Endgerät 4 zu Hilfe genommen, bei dem es sich vorliegend um ein Smartphone handelt. Das Smartphone ist mit einer Kamera 5 ausgestattet, mit der Fotos und Videos aufgenommen werden können. Auf dem Smartphone ist eine erfindungsgemäße App zur Durchführung von Wiederholungsprüfungen installiert. Wenn ein Benutzer die App startet, wird er durch die App instruiert, mittels der Kamera 5 Foto- und Videoaufnahmen von dem Feldgerät 1 zu erstellen. Die App gibt dem Benutzer diverse Instruktionen dazu, wie die Aufnahme zu erstellen ist. So wird der Benutzer informiert, ob eine Foto- oder eine Videoaufnahme zu erstellen ist. Ferner wird der Benutzer informiert, welche Abschnitte des Feldgeräts 1 aufzunehmen sind. Falls ein relevanter Abschnitt des Feldgeräts 1 in montiertem Zustand nicht sichtbar ist, kann die App dem Benutzer auch einen Hinweis geben, dass das Feldgerät 1 aus dem Behältnis auszubauen ist. Ferner gibt die App dem Benutzer Hinweise dazu, mit welcher optischen Vergrößerung das Feldgerät 1 zu erfassen ist. Um auch kleinste Details erfassen zu können, gibt die App dem Benutzer auch Hinweise dazu, unter welchem Blickwinkel Details des Feldgeräts 1 zu erfassen sind. Schließlich aktiviert die App auch noch ein Blitzlicht des Smartphones, damit die Aufnahmen in einer geeigneten Helligkeit aufgenommen werden können.

Während der Benutzer die Aufnahmen erstellt, gibt die App laufend ein Feedback zu den erstellten Aufnahmen aus. So wird der Benutzer beispielsweise darauf hingewiesen, falls die Aufnahmen unscharf sind oder falls Detailaufnahmen fehlen. Aufnahmen, die zur Auswertung nicht geeignet sind, werden von der App verworfen. Sobald alle erforderlichen Aufnahmen vom Benutzer erstellt worden sind, gibt die App eine Rückmeldung an den Benutzer aus, dass keine weiteren Aufnahmen mehr erstellt werden müssen.

Die App führt nun eine Auswertung der im Rahmen der Aufnahmen erzeugten Bilddaten durch, um zu bestimmen, ob sich das Feldgerät 1 in einem ordnungsgemäßen Zustand befindet. Die Auswertung der Bilddaten erfolgt mittels künstlicher Intelligenz, wobei ein neuronales Netz verwendet wird. Das neuronale Netz wurde für die Auswertung gesondert trainiert. Bei der Auswertung der Bilddaten identifiziert das neuronale Netz ein Typenschild 6 des Feldgeräts 1. Auf diesem befindet sich eine Modellnummer des Feldgeräts 1. Somit kann der genaue Typ des Feldgeräts 1 bestimmt werden und die Auswertung kann auf dieser Grundlage erfolgen. Im Rahmen der Auswertung überprüft die erfindungsgemäße App, ob an dem Feldgerät 1 Verunreinigungen oder Beschädigungen vorliegen. Wenn dies der Fall ist, wird auch ein Ausmaß der Verunreinigungen bzw. Beschädigungen ermittelt. Ausgehend davon bewertet die App, ob sich das Feldgerät 1 in dem ordnungsgemäßen Zustand befindet.

Im Anschluss erzeugt die App einen Bericht, den sich der Benutzer in der App anzeigen lassen kann. In dem Bericht ist aufgeführt, ob sich das Feldgerät 1 in dem ordnungsgemäßen Zustand befindet. Falls an dem Feldgerät 1 Mängel aufgefunden wurden, dann sind diese in dem Bericht ebenfalls verzeichnet. In dem Bericht ist zu jedem Mangel angegeben, wie schwerwiegend dieser ist. Ferner ist auch angegeben, wo sich der Mangel an dem Feldgerät 1 befindet. Außerdem sind in dem Bericht Vorschläge enthalten, wie die Mängel von dem Benutzer behoben werden kann, sofern dies möglich ist. Falls ein Mangel nicht von dem Benutzer behoben werden kann, schlägt der Bericht vor, eine Inspektion des Feldgeräts 1 durch einen Techniker durchführen zu lassen.

Fig. 2 zeigt ein Ablaufdiagramm des erfindungsgemäßen Verfahrens. Zunächst erhält eine App in einem Erhaltschritt 7 Bilddaten betreffend eine elektrische Anlage. Anschließend wird in einem Auswertungsschritt 8 bestimmt, ob sich die elektrische Anlage in einem ordnungsgemäßen Zustand befindet, wobei die Auswertung der Bilddaten basierend auf maschinellem Lernen und/oder künstlicher Intelligenz erfolgt. Schließlich wird in einem Generierungsschritt 9 ein Bericht generiert, der angibt, ob sich die elektrische Anlage in dem ordnungsgemäßen Zustand befindet.

Die genannten Schritte können erfindungsgemäß in unterschiedlichen Anwendungsfällen eingesetzt werden. Drei Anwendungsfälle des Verfahrens sind nachfolgend beispielhaft beschrieben.

Gemäß einem ersten Anwendungsfall wird eine Wiederholungsprüfung eines Drucksensors in einer Chemieanlage durchgeführt. Die Prüfung umfasst die Kontrolle auf Korrosion an einem Gehäuse des Drucksensors, auf Verunreinigungen an einer Prozessanschlussstelle des Drucksensors sowie auf Lesbarkeit der Typenschilder. Sämtliche genannten Schritte können im Rahmen einer Sichtprüfung durchgeführt werden, sodass das erfindungsgemäße Verfahren zum Einsatz kommen kann. Ein Benutzer öffnet eine erfindungsgemäße App auf seinem Smartphone, scannt einen Barcode des Drucksensors und wird nun von der App durch den Prüfprozess geführt. Die App fordert den Benutzer auf, Fotos aus bestimmten Blickwinkeln zu machen (z. B. Frontansicht, Seitenansicht, Nahaufnahme des Anschlusses). Die App analysiert die so gewonnenen Bilddaten und identifiziert eine Korrosionsstelle am Gehäuse sowie eine unleserliche Typenbeschriftung. Im Anschluss gibt die App einen Bericht aus, der diese Auffälligkeiten dokumentiert und Empfehlungen zur Behandlung gibt, z. B. Korrosionsschutz oder Ersatz des Drucksensors.

Gemäß einem zweiten Anwendungsfall wird eine Wiederholungsprüfung eines Sensors in einer Lebensmittelanlage durchgeführt. Ein Temperatursensor in einer Molkerei wird auf hygienische Unversehrtheit überprüft. Dabei ist besonders wichtig, dass keine Ablagerungen oder Rückstände an einem Gehäuse des Temperatursensors vorhanden sind. Eine erfindungsgemäße App unterstützt einen Benutzer bei der Aufnahme hochauflösender Bilder von Prozessanschlüssen und von dem Gehäuse des Temperatursensors. Die App erkennt bei der Auswertung der Bilder Rückstände, die als potenzielle Kontaminationsquellen identifiziert werden. Ein von der App generierter Bericht schlägt eine Reinigung und eine erneute Prüfung vor, bevor der Temperatursensor wieder in Betrieb genommen wird.

Gemäß einem dritten Anwendungsfall erfolgt eine Sichtprüfung eines Füllstandsensors in einer petrochemischen Anlage. Der Füllstandsensor wird im Rahmen einer Wiederholungsprüfung auf physikalische Schäden untersucht, da die raue Umgebung eine erhöhte Abnutzung erwarten lässt. Ein Benutzer nutzt die erfindungsgemäße App und nimmt ein Video auf, das den gesamten Sensor und seine Anschlüsse zeigt. Die App analysiert das Video und markiert eine deformierte Prozessanschlussstelle. Die App gibt einen Bericht aus, der die genaue Position der Deformation dokumentiert und eine detaillierte Inspektion durch einen Techniker empfiehlt.

Das vorliegend beschriebene Verfahren zeichnet sich dadurch aus, dass damit eine objektive Beurteilung von elektrischen Anlagen möglich ist. Somit kann ein höheres Sicherheitsniveau elektrischer Anlagen erreicht werden. Der erfindungsgemäß generierte Bericht ist vorteilhaft, da eine lückenlose Dokumentation und Rückverfolgbarkeit der Wiederholungsprüfung ermöglich wird. Zudem ergibt sich eine Zeitersparnis gegenüber der manuellen Erstellung von Prüfberichten. Die elektronisch erzeugten Prüfungsergebnisse können beispielsweise in bestehende Wartungssysteme oder Geräte-Datenbanken zur langfristigen Zustandsüberwachung integriert werden.

### Bezugszeichenliste

- 1: Feldgerät
- 2: Behältnis
- 3: Flüssigkeit
- 4: Mobiles Endgerät
- 5: Kamera
- 6: Typenschild
- 7: Erhaltschritt
- 8: Auswertungsschritt
- 9: Generierungsschritt

## Patentansprüche

1. Computerimplementiertes Verfahren zur Wiederholungsprüfung von elektrischen Anlagen, insbesondere von Feldgeräten (1), umfassend:
- Erhalt von Bilddaten betreffend eine elektrische Anlage,
- Auswertung der Bilddaten, um zu bestimmen, ob sich die elektrische Anlage in einem ordnungsgemäßen Zustand befindet, wobei die Auswertung der Bilddaten basierend auf maschinellem Lernen und/oder künstlicher Intelligenz erfolgt, und
- Generierung eines Berichts, der angibt, ob sich die elektrische Anlage in dem ordnungsgemäßen Zustand befindet.

2. Computerimplementiertes Verfahren nach Anspruch 1,
**dadurch gekennzeichnet, dass**
bei der Auswertung der Bilddaten dahingehend, ob sich die elektrische Anlage in dem ordnungsgemäßen Zustand befindet, überprüft wird, ob die elektrische Anlage mindestens einen sicherheitsrelevanten Mangel aufweist und/oder ob die elektrische Anlage aktuellen Errichtungsnormen für die elektrische Anlage entspricht.

3. Computerimplementiertes Verfahren nach Anspruch 2,
**dadurch gekennzeichnet, dass**
der mindestens eine sicherheitsrelevante Mangel sich aufgrund von Alterung, Abnutzung, Betriebs- und/oder Umgebungsbedingungen ergibt.

4. Computerimplementiertes Verfahren nach einem der Ansprüche 2 oder 3, **dadurch gekennzeichnet, dass**
der Bericht den mindestens einen Mangel der elektrischen Anlage angibt, wobei der Bericht optional enthält:
- eine Angabe einer Art des mindestens einen Mangels,
- eine Angabe eines Schweregrads des mindestens einen Mangels,
- eine Angabe einer Position des mindestens einen Mangels an der elektrischen Anlage,
- einen Vorschlag zur Behebung des Mangels, und/oder
- einen Vorschlag zur Inspektion der elektrischen Anlage durch einen Techniker.

5. Computerimplementiertes Verfahren nach einem der vorhergehenden Ansprüche,
**dadurch gekennzeichnet, dass**
die Auswertung der Bilddaten umfasst:
- Bewertung einer Leserlichkeit eines Typenschilds (6) der elektrischen Anlage,
- Bewertung eines Korrosionsgrads eines Gehäuses der elektrischen Anlage,
- Bewertung eines Grads einer Verunreinigung einer Prozessanschlussstelle und/oder eines Gehäuses der elektrischen Anlage, und/oder
- Bewertung eines Grads einer physikalischen Beschädigung der elektrischen Anlage.

6. Computerimplementiertes Verfahren nach einem der vorhergehenden Ansprüche,
**dadurch gekennzeichnet, dass**
die Bilddaten mindestens ein digitales Foto der elektrischen Anlage und/oder mindestens eine Videoaufnahme der elektrischen Anlage umfassen.

7. Computerimplementiertes Verfahren nach einem der vorhergehenden Ansprüche,
**dadurch gekennzeichnet, dass**
das Verfahren ferner umfasst:
Erhalt einer Typeninformation, die einen Typ der elektrischen Anlage angibt, wobei der Auswertung der Bilddaten die Typeninformation zugrunde gelegt wird.

8. Computerimplementiertes Verfahren nach Anspruch 7,
**dadurch gekennzeichnet, dass**
die Typeninformation auf einer Dateneingabe eines Benutzers beruht.

9. Computerimplementiertes Verfahren nach Anspruch 7,
**dadurch gekennzeichnet, dass**
die Typeninformation aus den Bilddaten extrahiert wird, wobei die Typeninformation auf Grundlage eines Erscheinungsbilds der elektrischen Anlage, eines Inhalts eines Typenschilds (6) der elektrischen Anlage und/oder eines QR-Codes ermittelt wird.

10. Computerimplementiertes Verfahren nach Anspruch 9,
**dadurch gekennzeichnet, dass**
das Verfahren ferner umfasst:
- Ausgabe einer ersten Anweisung, ein digitales Foto oder ein Video des Typenschilds (6) der elektrischen Anlage aufzunehmen.

11. Computerimplementiertes Verfahren nach einem der vorhergehenden Ansprüche,
**dadurch gekennzeichnet, dass**
das Verfahren ferner eine Ausgabe einer zweiten Anweisung zur Aufnahme der Bilddaten umfasst, wobei die zweite Anweisung eine Information enthält,
- ob ein digitales Foto oder ein Video aufzunehmen ist,
- welches Detail der elektrischen Anlage von der Aufnahme erfasst werden soll,
- in welchem Abstand von der elektrischen Anlage die Aufnahme durchzuführen ist,
- mit welcher optischen Vergrößerung die Aufnahme durchzuführen ist,
- unter welchem Blickwinkel die Aufnahme durchzuführen ist, und/oder
- ob die Aufnahme unter Verwendung von Blitzlicht oder zusätzlicher Beleuchtung durchzuführen ist.

12. Computerimplementiertes Verfahren nach einem der vorhergehenden Ansprüche,
**dadurch gekennzeichnet, dass**
das Verfahren ferner umfasst:
- Erhalt vorläufiger Bilddaten betreffend die elektrische Anlage,
- Prüfung, ob die vorläufigen Bilddaten mindestens eine Unzulänglichkeit aufweisen, die für die Auswertung, ob sich die elektrische Anlage in dem ordnungsgemäßen Zustand befindet, hinderlich ist, wobei die Prüfung bevorzugt basierend auf maschinellem Lernen und/oder künstlicher Intelligenz erfolgt, und
- falls die vorläufigen Bilddaten die mindestens eine Unzulänglichkeit aufweisen, Ausgabe einer Nachricht, die die mindestens eine Unzulänglichkeit aufzeigt.

13. Computerimplementiertes Verfahren nach Anspruch 12,
**dadurch gekennzeichnet, dass**
die mindestens eine Unzulänglichkeit darin besteht, dass:
- eine Ansicht der elektrischen Anlage fehlt,
- die elektrische Anlage in einem ungeeigneten Abstand aufgenommen wurde,
- die elektrische Anlage in einem ungeeigneten Blickwinkel aufgenommen wurde,
- die elektrische Anlage mit ungeeignetem Blitzlicht oder ungeeigneter Beleuchtung aufgenommen wurde, und/oder
- die vorläufigen Bilddaten eine ungeeignete Bildschärfe aufweisen.

14. System zur Wiederholungsprüfung von elektrischen Anlagen, insbesondere von Feldgeräten (1), mit einer Vorrichtung zur Datenverarbeitung, die dazu konfiguriert ist, das Verfahren nach einem der Ansprüche 1 bis 13 durchzuführen.

15. Computerprogrammprodukt, umfassend Befehle, die bei der Ausführung des Programms durch einen Computer diesen veranlassen, das Verfahren nach einem der Ansprüche 1 bis 13 durchzuführen.
